(19) Europäisches Patentamt
European Patent Office
Office européen des brevets

(11) EP 0 786 248 B1

(12) **FASCICULE DE BREVET EUROPEEN**

(45) Date de publication et mention de la délivrance du brevet:
**15.10.2003 Bulletin 2003/42**

(51) Int Cl.[7]: **A61K 7/46**, A23L 1/222, A23L 1/226, C11B 9/00

(21) Numéro de dépôt: **96120558.0**

(22) Date de dépôt: **20.12.1996**

(54) **Utilisation du dithioacétate de S,S'-éthylidène à titre d'ingrédient parfumant et aromatisant**

Verwendung von S,S'-Ethylidendiacetat als Duft- und Aromastoff

Use of S,S'-ehtylidene diacetate as perfuming and flavouring ingredient

(84) Etats contractants désignés:
**CH DE ES FR GB IT LI NL**

(30) Priorité: **25.01.1996 CH 19296**

(43) Date de publication de la demande:
**30.07.1997 Bulletin 1997/31**

(73) Titulaire: **FIRMENICH SA**
**1211 Genève 8 (CH)**

(72) Inventeur: **Naef, Regula**
**1227 Carouge (CH)**

(74) Mandataire: **Salvaterra-Garcia, Maria de Lurdes**
**Firmenich SA**
**Département des Brevets**
**Case Postale 239**
**1211 Genève 8 (CH)**

(56) Documents cités:
- **NAEF ET AL: 'Volatile constituents of Blood and Bond Orange Juices: A Comparison.' J. ESSENT. OIL RES. vol. 8, Novembre 1996 - Décembre 1996, pages 587 - 595**

Remarques:
Le dossier contient des informations techniques présentées postérieurement au dépôt de la demande et ne figurant pas dans le présent fascicule.

EP 0 786 248 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a trait au domaine de la parfumerie et de l'industrie des arômes. Elle concerne, plus particulièrement, l'utilisation du dithioacétate de S,S'-éthylidène à titre d'ingrédient parfumant ou aromatisant.

Le dithioacétate de S,S'-éthylidène ou 1,1-bis(acétylthio)éthane est un composé de structure connue. Il a, par exemple, été décrit par L. Sternson dans J. Org. Chem. 1978, 43, 4532, dans le cadre d'une étude du comportement d'acides thioliques dans des solutions basiques. Cependant, nous n'avons trouvé dans l'art antérieur aucune mention des propriétés organoleptiques de ce composé, ni même suggestion de son éventuelle utilité en tant qu'ingrédient parfumant ou aromatisant.

Or, nous avons maintenant découvert que ce composé possède des propriétés aromatisantes très intéressantes et qu'il développe, à haute dilution, des notes gustatives très utiles pour l'aromatisation d'aliments et boissons, ainsi que d'autres produits de consommation traditionnellement aromatisés.

En effet, ce composé développe une note aromatique multivariée où sont représentés des caractères de type soufré, alliacé, "pipi de chat", métallique, mais aussi vert, fruité, gras, viandeux-bouillon. Cette combinaison et variété de caractères organoleptiques rend le dithioacétate de S,S'-éthylidène particulièrement utile aussi bien dans des applications de type fruité et notamment hespéridé, que dans des applications de type salé, notamment viandeux, légumes ou encore alliacé, comme il ressort des exemples présentés plus loin.

Notre invention est basée sur la découverte fortuite que le dithioacétate de S,S'-éthylidène était un composant naturel de l'orange sanguine et plus particulièrement du jus de ce fruit.

Malgré l'existence d'une étude sur les composés volatiles du jus d'orange sanguine (voir Schreier et al., Z. Lebensm. Unters. Forsch. 1977, 164, 188), la présence du composé susmentionné dans ce jus était jusqu'ici insoupçonnée. Elle a été décelée grâce à l'emploi d'une technique fort complexe, faisant appel à des méthodes utilisant des techniques de fractionnement combinées à la chromatographie en phase gazeuse.

Ce composé naturel a été extrait d'un jus d'oranges sanguines, obtenu par pression à froid d'oranges de Sicile. 20 Kg de fruits ont été pressés à l'aide d'un presse-agrumes électrique de type ménager pour fournir 8,7 1 de jus. On a choisi une méthode d'extraction à froid, à savoir l'extraction en continu de Kutscher-Steudel. Le jus a été dilué 1:1 1 dans l'eau déminéralisée et extrait pendant 4 h avec éther diéthylique. Après évaporation soigneuse du solvant sur colonne de type Vigreux, l'extrait présentait un goût typique du goût d'orange sanguine frais.

Cet extrait a été analysé par chromatographie "flash" sur silica gel, utilisant du pentane/éther 9:1 en tant qu'éluant, suivie d'injection directe dans un appareil de couplage CG-SM (chromatographie en phase gazeuse - spectrométrie de masse). Le dithioacétate de S,S'-éthylidène décelé par ce procédé présentait un temps de rétention de 37,7 min sur colonne Supelcowax (60 m de longueur ; 0,25 mm d.i. ; T=50-220°C isotherm. 5 min, 5°/min) et le spectre de masse suivant :

SM : 178($M^+$, 3), 163(0,5), 136(2), 135(13), 124(16), 118(2), 103(7), 93(4), 76(2), 61(8), 60(6), 59(13), 43(100).

La structure de ce composé, déduite à partir de ce spectre de masse, a été confirmée par synthèse. Il a ainsi été établi qu'il s'agissait effectivement du produit de condensation de l'acide thioacétique et de l'acétaldéhyde, une sorte d'acétal pouvant être obtenu comme il est décrit par L. Sternson (ref. citée), par une synthèse en une étape selon le schéma que voici :

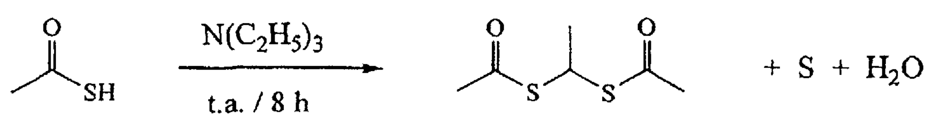


Le produit ainsi obtenu présentait, en plus du spectre de masse décrit plus haut, les caractéristiques analytiques suivantes :

Pureté : 99,9%
RMN($^1$H, 360MHz) : 1,70(d, J=8Hz, 3H) ; 2,32(s, 6H) ; 5,10(q, J=8Hz, 1H) δ ppm
RMN($^{13}$C, 90,55MHz) : 22,28(q) ; 30,26(q) ; 41,23(d) ; 193,88(s) δ ppm

Malgré le fait que ce composé contribue à l'arôme typique du jus d'orange sanguine et peut de ce fait servir à sa reconstitution, notamment lorsqu'utilisé dans des concentrations relativement diluées, ses propriétés organoleptiques sont telles que son champ d'application s'est révélé être bien plus vaste. Il trouve en effet une utilisation très étendue dans le domaine des arômes.

D'une façon générale, il se révèle fort avantageux dans toutes les compositions aromatisantes de type hespéridé, et plus particulièrement dans des arômes de type pamplemousse, dont il renforce le caractère juteux et pulpeux. La note soufrée typique des arômes de type pamplemousse a été jusqu'ici obtenue avec des composés connus tels que la 8-mercapto-3-p-menthanone (voir, par exemple, US 4,224,351), le 2-méthyl-4-propyl-1,3-oxathiane (voir, par exemple, US 4,220,561) ou encore le 1-p-menthène-8-thiol (voir, par exemple, US 4,478,865). Or, nous avons constaté avec surprise que le dithioacétate de S,S'-éthylidène pouvait remplacer, à cet effet, ces composés avec succès. Par ailleurs, par rapport à la 8-mercapto-3-p-menthanone, alors que cette dernière impartit une note soufrée plus volatile, le composé de l'invention apporte un caractère juteux/pulpeux renforcé.

D'autre part, lorsqu'ajouté à d'autres compositions de type fruité et notamment de type fruits tropicaux, il s'est avéré qu'il les rendait plus juteuses et fraîches, et renforçait leur caractère fruité.

Son effet organoleptique s'est fait également sentir de façon marquée et très positive dans des compositions de type oignon et ail, ou encore de type viande, voire cacahouète et autres noix.

La valeur de ce composé en tant qu'ingrédient aromatisant est d'autant plus importante que sa note aromatique est très puissante. En effet, même à des concentrations de l'ordre de 10 à 50 ppb (parties par milliard), son goût est encore détectable en solution sucrée acidulée. Ainsi, les concentrations dans lesquelles le dithioacétate de S,S'-éhtylidène peut être ajouté aux compositions aromatisantes et aux produits que l'on désire aromatiser, pour impartir les effets cités, varient dans une gamme de valeurs très étendue, pouvant aller de la limite inférieure susmentionnée jusqu'à des valeurs de l'ordre de 5 ppm, voire 20 ou même 50 ppm (parties par million), par rapport au poids de la composition ou du produit dans lequel il est incorporé.

Le composé se prête à l'aromatisation de produits divers tels les aliments, les boissons, les chewing-gums, les dentifrices ou encore les préparations pharmaceutiques.

A titre d'aliments pouvant être aromatisés, on peut mentionner les glaces, les crèmes à dessert, les yogourts, les produits lactés en général, les produits de confiserie ou de boulangerie, les sirops, les sucres cuits, les confitures ou, encore, les soupes et bouillons, les extraits pour la préparation de soupes et de sauces, les sauces en général, les épices, les produits de viande et les plats cuisinés. On peut citer également les aliments du type amuse-gueules, chips ou autres.

Le dithioacétate de S,S'-éthylidène est incorporé aux aliments, boissons, chewing-gums, dentifrices ou préparations pharmaceutiques que l'on désire aromatiser selon des procédés usuels dans l'art, soit seul, soit en mélange avec d'autres ingrédients aromatisants naturels ou synthétiques. Il peut être employé tel quel ou en solution dans l'un des solvants comestibles usuels tels la triacétine, l'alcool éthylique ou le propylène glycol, ou en mélange sur un support solide, par exemple, une dextrine ou la gomme arabique.

Par ailleurs, il a été constaté que le composé susmentionné présentait également un intérêt pour la parfumerie. Il possède une odeur soufrée très naturelle, avec un côté herbacé et une nuance de type cuir très intéressants. Il s'agit en effet d'un produit multiodorant, qui développe également des notes de type alliacé, oignon, galbanum ou encore bergamote, rappelant l'absolue de la feuille du bergamotier.

Son odeur se révèle également d'une grande puissance. Par exemple, lors d'un simple bouquetage d'une huile essentielle d'orange de Floride, à l'aide de 40 parties en poids d'une solution dans le dipropylèneglycol (DIPG) contenant 0,01% en poids de ce composé, pour mille parties de ladite essence, on a observé un effet odorant bien perceptible et très utile, ce composé ayant apporté une note amère très naturelle et diffusible, rappelant l'odeur de l'orange amère. Il peut donc être utilisé dans des concentrations même très diluées, par exemple de l'ordre de 0,001 % en poids et allant jusqu'à 0,005% en ploids ou plus, suivant le type d'application.

En plus, son odeur a une bonne ténacité, ce qui est rare pour les notes de type soufré.

Le dithioacétate de S,S'-éthylidène peut être utilisé avantageusement, aussi bien en parfumerie fine que dans des applications fonctionnelles, pour la préparation de compositions parfumantes et produits parfumés. Parmi ces derniers on peut citer les parfums ou eaux de toilette, les savons, les gels de douche ou bain, les shampoings et autres produits d'hygiène capillaire, les préparations cosmétiques et les désodorisants corporels ou d'air ambiant. Il trouve également un emploi utile dans le parfumage de détergents pour le linge et la vaisselle, d'adoucissants textiles et de produits d'entretien.

Lorsqu'il est utilisé pour ces applications, et comme il est cité plus haut, des effets olfactifs intéressants peuvent être obtenus en utilisant de faibles concentrations, et l'homme de l'art est à même de les choisir en fonction de la nature du produit que l'on veut parfumer et de l'intensité de l'effet parfumant désiré.

De même, dans ces applications, il peut être employé soit seul, soit en mélange avec d'autres co-ingrédients parfumants, des solvants ou adjuvants usuels. Une énumération plus détaillée de ces co-ingrédients est ici superflue, l'homme du métier étant à même d'en sélectionner sur la base de son expérience et en s'inspirant d'ouvrages de référence tels que le livre de S. Arctander "Perfume and Flavor Chemicals, Montclair, New Jersey, (1969).

Nous avons constaté que ce composé s'harmonise bien avec des ingrédients parfumants très variés et qu'il

peut apporter des contributions avantageuses aussi bien aux Colognes de type classique, qu'à des compositions de type fruité ou floral, vertes, boisées ou encore, bien sûr, à caractère mixte. De l'avis des experts parfumeurs, il peut également être utile et avantageux dans les applications typiques d'autres produits soufrés connus, tels que la 8-mercapto-3-p-menthanone, par rapport à laquelle il est d'un usage plus aisé, ou le 2-méthyl-4-propyl-1,3-oxathiane.
L'invention sera maintenant décrite plus en détail à l'aide des exemples présentés ci-après.

Exemple 1

Compositions aromatisantes

On a préparé des compositions aromatisantes selon l'invention en ajoutant à des arômes de base de type varié tels que cités ci-après, une solution à 1% en poids de dithioacétate de S,S'-éthylidène dans l'éthanol - Solution S. Les concentrations de cette solution utilisées sont indiquées au Tableau, en % en poids par rapport au poids de la composition respective.

| Compositions (type) | Type d'arôme de base | Solution S % en poids |
|---|---|---|
| **A** | fruit de la passion no. 502010 A* | 0,3 - 0,5 |
| **B** | ananas no. 502434 A* | 0,3 - 0,5 |
| **C** | mangue no. 55508 A* | 0,5 - 1 |
| **D** | guava no. 502025 A* | 0,3 - 0,5 |
| **E** | durian no. 502652 A* | 2,0 - 5,0 |
| **F** | cassis no. 5002009 A* | 0,5 |

* origine : Firmenich SA, Genève, Suisse

Toutes les compositions aromatisantes ont été évaluées à 0,1% en poids dans de l'eau sucrée acidulée (10% sucre, 0,1% acide citrique) et comparées à l'aveugle aux arômes de base susmentionnés, goûtés dans les mêmes conditions.
De l'avis du panel d'experts aromaticiens qui a effectué ces évaluations, toutes les compositions de type A à F étaient préférées auxdits arômes de base correspondants, l'addition de la solution S à ces derniers ayant, d'une façon générale, rendu leur goût plus juteux, frais et fruité.

Exemple 2

Aromatisation d'un sirop de cassis

On a ajouté à un sirop de cassis de base, d'origine commerciale, 0,2% en poids d'une solution à 0,01% en poids de dithioacétate de S,S'-éthylidène dans l'éthanol. Le sirop aromatisé ainsi obtenu et le sirop de base ont été dilués dans l'eau à raison d'une partie de sirop pour 4 parties d'eau, et ainsi comparés à l'aveugle par un panel d'experts aromaticiens. Ces derniers ont préféré le sirop aromatisé selon l'invention et indiqué que son goût était plus frais que celui du sirop de base, avec un caractère jus de cassis accru et plus typique.

Exemple 3

Compositions de type orange et pamplemousse

On a ajouté à une solution d'une huile essentielle d'écorce d'orange (200 ppm), dans l'eau sucrée acidulée (10% sucre, 0,1% acide citrique), 0,01 ppm de dithioacétate de S,S'-éthylidène. Lors de l'évaluation par un panel d'experts aromaticiens de la solution aromatisée nouvelle ainsi obtenue, il est apparu que cette solution avait acquis une tonalité plus juteuse et pulpeuse. Le même effet organoleptique a été constaté lorqu'on a ajouté à raison de 0,01 ppm du composé susmentionné à un mélange de terpènes d'orange (origine : Firmenich SA, Genève, Suisse) dosé à 200 ppm dans l'eau sucrée acidulée, dont le goût avait aussi acquis une tonalité pamplemousse.

Exemple 4

Compositions aromatisantes de type salé

On a ajouté à une solution aqueuse saline de base (0,5% NaCl) contenant 50 ppm d'un arôme de type oignon rôti (503679 TH ; origine : Firmenich SA, Genève, Suisse), 0,5 ppm de dithioacétate de S,S'-éthylidène. La solution nouvelle ainsi obtenue a été goûtée et comparée à l'aveugle avec la solution de base par un panel d'experts aromaticiens. De l'avis de ces derniers, la solution nouvelle avait un goût plus volumineux, avec un caractère grillé et rôti accru.
Un essai similaire a été effectué avec un arôme de type boeuf grillé (504015 TH ; origine : Firmenich SA, Genève, Suisse) à 30 ppm dans la solution saline, auquel on a ajouté 0,05 ppm du composé susmentionné. De nouveau, l'addition de ce composé avait eu un effet intéressant, l'arôme ayant acquis un caractère plus juteux, avec des notes saignantes et grillées accrues, et ayant plus d'impact gustatif.
L'addition de 0,5 ppm de dithioacétate de S,S'-éthylidène à 100 ppm d'un arôme de type cacahouète (502503 AH ; origine : Firmenich SA, Genève, Suisse) dans la solution saline a aussi renforcé la rondeur de l'arôme et l'a rendu plus naturel et proche du goût de cacahouète.

Exemple 5

Composition aromatisante de type pamplemousse

On a préparé une composition aromatisante de base de type pamplemousse à l'aide des ingrédients suivants :

| Ingrédients | Parties en poids |
|---|---|
| Acétaldéhyde | 25 |
| Acétate de styrallyle | 25 |
| tran-2-Hexénol | 10 |
| Terpènes d'orange * | 940 |
| Total | 1000 |

* origine : Firmenich SA, Genève, Suisse

A cette composition de base, dosée à 200 ppm dans de l'eau sucrée acidulée, on a ajouté à raison de 1,5 parties en poids d'une solution à 1% de 8-mercapto-3-p-menthanone dans des terpènes d'orange pour obtenir une composition A et 5 parties en poids d'une solution à 1% de dithioacétate de S,S'-éthylidène dans des terpènes d'orange pour préparer une composition nouvelle B. Ces deux compositions A et B ont alors été évaluées à l'aveugle par des experts aromaticiens, lesquels ont trouvé que la composition B avait un caractère pamplemousse plus juteux et pulpeux que celui de la composition A.

Exemple 6

Composition parfumante

On a préparé une composition parfumante de base en mélangeant les ingrédients suivants, dans les proportions indiquées :

| Ingrédients | Parties en poids |
|---|---|
| Aldéhyde $C_8$ à 10% * | 5 |
| Aldéhyde $C_9$ à 1 % * | 5 |
| 15-Pentadéc-(11, 12)-énolide 1) à 50% * | 5 |
| Hédione ®2) | 5 |
| Acétate de géranyle | 15 |
| Aldéhyde $C_{10}$ à 10% * | 15 |

*dans le DIPG

1) origine : Firmenich SA, Genève, Suisse

2) dihydrojasmonate de méthyle ; origine : Firmenich SA, Genève, Suisse

(suite)

| Ingrédients | Parties en poids |
|---|---|
| Essence de néroli | 15 |
| Essence de mandarine | 15 |
| Résinoïde de benjoin | 20 |
| Benzoate de benzyle | 200 |
| Essence de bergamote | 300 |
| Essence de citron | 400 |
| Total | 1000 |

A cette composition de base de type Cologne classique on a ajouté 40 parties en poids d'une solution à 0,01% en poids de dithioacétate de S,S'-éthylidène dans le DIPG. On a ainsi obtenu une composition parfumante nouvelle dont l'aspect néroli, riche et naturel avait été nettement accentué, et le côté amer du néroli exhalté, par rapport à la composition de base. La composition nouvelle avait aussi plus d'éclat, donnant une sensation plus originale.

**Revendications**

1. Utilisation du dithioacétate de S,S'-éthylidène à titre d'ingrédient parfumant ou aromatisant.

2. Composition parfumante ou produit parfumé contenant à titre d'ingrédient actif le dithioacétate de S,S'-éthylidène, dans des concentrations comprises entre 0,00 1 % et 0,005% en poids, par rapport au poids de composition ou de produit.

3. Produit parfumé selon la revendication 2, sous forme d'un parfum ou d'une eau de toilette, d'un savon, d'un gel de douche ou bain, d'un shampoing ou autre produit d'hygiène capillaire, d'une préparation cosmétique, d'un désodorisant corporel ou d'air ambiant, d'un détergent ou adoucissant textile ou d'un produit d'entretien.

4. Composition aromatisante ou produit aromatisé contenant à titre d'ingrédient actif le dithioacétate de S,S'-éthylidène dans une concentration comprise entre 10 ppb et 50 ppm du poids total de la composition ou produit.

5. Produit aromatisé selon la revendication 4, sous forme d'un aliment ou d'une boisson, d'un chewing-gum ou d'une préparation pharmaceutique.

6. Procédé pour conférer, améliorer ou modifier le caractère gustatif de type fruité d'une composition aromatisante ou d'un produit aromatisé, **caractérisé en ce qu'**on ajoute à ladite composition ou audit produit le dithioacétate de S,S'-éthylidène.

**Patentansprüche**

1. Verwendung von S,S'-Ethylidendithioacetat als Riechoder Aromastoff.

2. Riechstoffzusammensetzung oder parfümiertes Produkt, welche bzw. welches als aktiven Inhaltsstoff S,S'-Ethylidendithioacetat in Konzentrationen zwischen 0,001 Gew.-% und 0,005 Gew.-% bezogen auf das Gewicht der Zusammensetzung bzw. des Produktes enthält.

3. Parfümiertes Produkt nach Anspruch 2 in Form eines Parfüms oder eines Eau-de-Toilette, einer Seife, einees Dusch- oder Badegels, eines Shampoo oder anderen Haarpflegeproduktes, eines kosmetischen Präparats, eines Körper- oder Raumluftdeodorant, eines Detergens oder Textilweichspülers oder eines Allzweckreinigers.

4. Aromatisierende Zusammensetzung oder aromatisiertes Produkt, welche bzw. welches als aktiven Inhaltsstoff S, S'-Ethylidendithioacetat in einer Konzentration von zwischen 10 ppb und 50 ppm des Gesamtgewichts der Zusammensetzung bzw. des Produktes enthält.

5. Aromatisiertes Produkt nach Anspruch 4 in Form eines Nahrungsmittels oder eines Getränkes, eines Kaugummis

oder eines pharmazeutischen Präparates.

6. Verfahren zum Verleihen, Verbessern oder Modifizieren des Geschmackscharakters vom fruchtigen Typ einer aromatisierenden Zusammensetzung oder eines aromatisierten Produktes, **dadurch gekennzeichnet, daß** der Zusammensetzung bzw. dem Produkt S,S'-Ethylidendithioacetat zugegeben wird.

## Claims

1. Use as perfuming or flavoring ingredient of S,S'-ethylidene dithioacetate.

2. Perfuming composition or perfumed article containing as active ingredient S,S'-ethylidene dithioacetate, in concentrations comprised between 0.001% and 0.005% by weight, relative to the weight of the composition or article.

3. Perfumed article according to claim 2, in the form of a perfume or cologne, a soap, a bath- or shower gel, a shampoo or other hair-care product, a cosmetic preparation, a body deodorant, an air-freshener, a detergent or fabric softener, or an all-purpose household cleaner.

4. Flavoring composition or flavored article containing as active ingredient S,S'-ethylidene dithioacetate, in a concentration comprised between 10 ppb and 50 ppm of the total weight of the composition or article.

5. Flavored article according to claim 4, in the form of a food or beverage, chewing-gum or pharmaceutical composition.

6. A method of imparting, improving or modifying the fruity taste of a flavoring composition or flavored article, **characterized in that** S,S'-ethylidene dithioacetate is added to said composition or article.